# EUROPEAN PATENT APPLICATION

(11) **EP 3 381 756 A1**
(43) Date of publication of application: **03.10.2018**
(21) Application number: 18164624.1
(22) Date of filing: 28.03.2018
(51) Int. Cl.: B60W 20/16, B60W 20/13, B60W 10/06, B60W 10/08, B60K 6/445, B60W 50/00, F02D 41/02, B60W 20/11

(54) **EXHAUST GAS CONTROL SYSTEM AND EXHAUST GAS CONTROL METHOD FOR HYBRID VEHICLE**

(30) Priority: 29.03.2017 JP 2017065558
(71) Applicant: Toyota Jidosha Kabushiki Kaisha, Aichi-Ken 471-8571 (JP)
(72) Inventor: FUKUDA, Koichiro, Aichi-ken,, 471-8571 (JP)
(74) Representative: D Young & Co LLP

(57) **Abstract**

An exhaust gas control system for a hybrid vehicle includes a NOx storage-reduction catalyst (4), and an electronic control unit (20). The electronic control unit (20) controls the internal combustion engine (1) so as to reduce an engine speed or stop operation of the internal combustion engine (1) and controls an electric motor (52) so as to compensate for a needed torque of the hybrid vehicle when NOx reduction treatment is executed when a charging amount of a battery when a predetermined NOx reduction execution condition is satisfied is equal to or larger than a predetermined charging amount, and controls the internal combustion engine (1) so as to maintain an operational state of the internal combustion engine (1) at a normal operation when the NOx reduction treatment is executed when the charging amount of the battery when the predetermined NOx reduction execution condition is satisfied is smaller than the predetermined charging amount.

## Description

### BACKGROUND OF THE INVENTION

### 1. Field of the Invention

The present invention relates to an exhaust gas control system and an exhaust gas control method for a hybrid vehicle.

### 2. Description of Related Art

A technique of providing a NOx storage-reduction catalyst (hereinafter, may be referred to as an "NSR catalyst") as an exhaust gas control catalyst in an exhaust passage of an internal combustion engine that performs a lean burn operation (that is an operation with a higher air-fuel ratio than a stoichiometric air-fuel ratio) is known. The NSR catalyst has a function of storing NOx in exhaust gas in the case of a lean air-fuel ratio, in which the air-fuel ratio inside the NSR catalyst is higher than the stoichiometric air-fuel ratio, and of reducing and releasing the stored NOx when a reducing agent is present in the case of a rich air-fuel ratio, in which the air-fuel ratio inside the NSR catalyst is lower than the stoichiometric air-fuel ratio.

The NSR catalyst as described above is also applied to hybrid vehicles having an internal combustion engine and an electric motor as power sources. Japanese Unexamined Patent Application Publication No. 2006-112311 (JP 2006-112311 A) discloses a technique for reducing NOx stored in an NSR catalyst in a configuration in which the NSR catalyst is provided in an exhaust passage of an internal combustion engine mounted on a hybrid vehicle. In the technique described in JP 2006-112311 A, when NOx stored in the NSR catalyst is reduced, the engine speed of the internal combustion engine is reduced or the operation of the internal combustion engine is stopped after fuel serving as a reducing agent is supplied to the NSR catalyst. Also, a needed torque is compensated by driving the electric motor. According to the technique as described above, after fuel is supplied to the NSR catalyst, the flow rate of exhaust gas that flows into the NSR catalyst decreases, or no exhaust gas newly flows into the NSR catalyst. As a result, the amount of oxygen to be supplied to the NSR catalyst decreases compared to a case where the operational state of the internal combustion engine is a normal operation, and the amount of heat taken away by the exhaust gas also decreases. For that reason, it is possible to more efficiently reduce NOx stored in the NSR catalyst. Hence, the amount of fuel to be consumed for reducing NOx stored in the NSR catalyst can be made smaller.

### SUMMARY OF THE INVENTION

As described above, in the configuration in which the NSR catalyst was provided in the exhaust passage of the internal combustion engine mounted on the hybrid vehicle, when the engine speed of the internal combustion engine is reduced or the operation of the internal combustion engine is stopped when fuel is supplied to the NSR catalyst in order to reduce NOx stored in the NSR catalyst, there is a need for controlling the electric motor in order to compensate for the needed torque according to the throttle valve opening degree. Then, since the ratio of the output of the electric motor to the needed torque is increased as usual, the charging amount (the state of charge) of the battery decreases.

Here, regarding the charging amount of the battery, a target charging amount range that is a suitable charging amount range is set in advance. For that reason, as described above, when the charging amount of the battery decreases to a lower limit value of the target charging amount range after the driving of the electric motor is started with a reduction in the engine speed of the internal combustion engine or the operation stop thereof, the driving of the electric motor is stopped and the needed torque is compensated for, solely by the internal combustion engine, irrespective of the progress situation of the NOx reduction in the NSR catalyst at that time. Then, when the engine speed of an internal combustion engine is reduced, there is a need for increasing the engine speed irrespective of the progress situation of the NOx reduction in the NSR catalyst. Additionally, when the operation of the internal combustion engine is stopped, the operation of the internal combustion engine is resumed irrespective of the progress situation of the NOx reduction in the NSR catalyst.

In this case, when the reduction of NOx in the NSR catalyst is not completed when the operation of the internal combustion engine is resumed, in order to compensate for the needed torque the engine speed of the internal combustion engine is increased or the operation of the internal combustion engine is resumed, when fuel components (hereinafter may be referred to as "unreacted fuel") that are not yet consumed for the reduction of NOx are present in the NSR catalyst. Then, the unreacted fuel may flow out of the NSR catalyst. In the above-described case, deterioration of exhaust gas components is caused.

The invention provides a technique capable of suppressing the amount of fuel to be consumed for reducing NOx stored in an NSR catalyst and suppressing the deterioration of exhaust gas components by unreacted fuel flowing out of the NSR catalyst compatible with each other, when the NSR catalyst is provided in an exhaust passage of an internal combustion engine in a hybrid vehicle in which an internal combustion engine that performs a lean burn operation and an electric motor are provided as power sources of a vehicle.

In the aspect of the invention, when NOx reduction treatment in which fuel is supplied to the NSR catalyst is executed, whether or not there is a reduction in the engine speed of the internal combustion engine or the operation stop thereof, and whether or not the control of the electric motor for compensating for a needed torque is executed is determined based on the charging amount of a battery when a predetermined NOx reduction execution condition is satisfied.

A first aspect of the invention relates to an exhaust gas control system for a hybrid vehicle. The hybrid vehicle includes an internal combustion engine as a power source, an electric motor as a power source, a generator, and a battery. The internal combustion engine is configured to perform a lean burn operation. The generator is configured to generate electrical power with power output from the internal combustion engine. The battery is connected to the generator so as to be charged with the electrical power generated by the generator. The battery is connected to the electric motor so as to supply electrical power to the electric motor. The exhaust gas control system includes a NOx storage-reduction catalyst disposed in an exhaust passage of the internal combustion engine, and an electronic control unit. The electronic control unit is configured to acquire a charging amount of the battery; set a value larger than a lower limit value of a predetermined target charging amount range and smaller than an upper limit value of the predetermined target charging amount range as a predetermined charging amount; control the internal combustion engine so as to execute NOx reduction treatment in which NOx stored in the NOx storage-reduction catalyst is reduced, when a predetermined NOx reduction execution condition is satisfied, the NOx reduction treatment being treatment in which fuel serving as a reducing agent is supplied to the NOx storage-reduction catalyst; control the internal combustion engine so as to reduce an engine speed of the internal combustion engine or stop operation of the internal combustion engine and control the electric motor so as to compensate for a needed torque of the hybrid vehicle when the NOx reduction treatment is executed when the charging amount of the battery when the predetermined NOx reduction execution condition is satisfied is equal to or larger than the predetermined charging amount; and control the internal combustion engine so as to maintain an operational state of the internal combustion engine at a normal operation when the NOx reduction treatment is executed when the charging amount of the battery when the predetermined NOx reduction execution condition is satisfied is smaller than the predetermined charging amount.

According to the first aspect of the invention, electrical power is supplied from the battery to the electric motor when the electric motor is driven. The battery is charged with the electrical power generated by the generator. Additionally, the generator generates electrical power with the power output from the internal combustion engine. Additionally, the predetermined target charging amount range of the charging amount of the battery is set in advance. Additionally, the charging amount of the battery is acquired by the electronic control unit. Also, power generation is performed by the generator such that the charging amount of the battery is maintained within the predetermined target charging amount range.

In the first aspect of the invention, when the predetermined NOx reduction execution condition is satisfied, the electronic control unit controls the internal combustion engine so as to execute the NOx reduction treatment in which NOx stored in the NOx storage-reduction catalyst is reduced. The internal combustion engine is controlled so as reduce the engine speed of the internal combustion engine or stop the operation of the internal combustion engine and the electric motor is controlled so as to compensate for the needed torque of the hybrid vehicle when the NOx reduction treatment is executed when the charging amount of the battery when the predetermined NOx reduction execution condition is satisfied is equal to or larger than the predetermined charging amount. Here, the predetermined charging amount is a value larger than the lower limit value of the predetermined target charging amount range and smaller than the upper limit value of the predetermined target charging amount range. Additionally, the predetermined charging amount is set as a threshold value of the charging amount assuming that the charging amount of the battery is maintained at a value equal to or larger than the lower limit value of the predetermined target charging amount range, even when the control of the electric motor for the compensation of the needed torque is continued until the reduction of NOx in the NSR catalyst is completed. In addition, when the NOx reduction treatment is executed, the reduction in engine speed of the internal combustion engine or the operation stop thereof may be executed after the supply of fuel to the NSR catalyst is executed. Additionally, the supply of fuel to the NSR catalyst may be executed after the reduction in the engine speed of the internal combustion engine is executed. Additionally, when fuel is supplied to the NSR catalyst by a fuel addition valve provided immediately upstream of the NSR catalyst, the supply of fuel to the NSR catalyst may be executed after the operation stop of the internal combustion engine is executed.

On the other hand, when the charging amount of the battery when the predetermined NOx reduction execution condition is satisfied is smaller than the predetermined charging amount, the internal combustion engine is controlled to maintain the operational state of the internal combustion engine at the normal operation when the NOx reduction treatment is executed. Here, the normal operation is an operational state of the internal combustion engine set in advance in accordance with the needed torque.

That is, in the first aspect of the invention, when the NOx reduction treatment is executed solely when the charging amount of the battery when the predetermined NOx reduction execution condition is satisfied is equal to or larger than the predetermined charging amount, the reduction in the engine speed of the internal combustion engine or the operation stop thereof, and the control of the electric motor for the compensation of the needed torque are executed. For that reason, when the charging amount of the battery when the predetermined NOx reduction execution condition is satisfied is equal to or larger than the predetermined charging amount, the total amount of fuel to be supplied to the NSR catalyst for NOx reduction can be reduced compared to a case where the internal combustion engine is controlled to maintain the operational state of an internal combustion engine at a normal operation. Hence, the amount of fuel to be consumed for reducing NOx stored in the NSR catalyst can be further suppressed.

On the other hand, when the charging amount of the battery when a predetermined NOx reduction execution condition is satisfied is smaller than a predetermined charging amount, the reduction in the engine speed of the internal combustion engine or the operation stop thereof is not executed when the NOx reduction treatment is executed. Hence, when the control of the electric motor for the compensation of the needed torque is started with the reduction in the engine speed of the internal combustion engine or the operation stop thereof, a situation where the charging amount of the battery falls below the lower limit value of the predetermined target charging amount range before the NOx reduction in the NSR catalyst is completed is further suppressed. That is, a situation in which the driving of the electric motor is stopped in a state where unreacted fuel is present in the NSR catalyst, and accordingly, the engine speed of the internal combustion engine increases or the operation of the internal combustion engine is resumed is further suppressed. For that reason, a situation in which unreacted fuel flows out of the NSR catalyst with the increase in the engine speed or the resumption of the operation of the internal combustion engine can be further suppressed. Therefore, deterioration of exhaust gas components can be further suppressed.

In the first aspect of the invention, the electronic control unit may be configured to estimate a power consumption amount that is electrical energy of the battery assumed to be consumed for driving the electric motor until reduction of NOx in the NOx storage-reduction catalyst is completed, when supposing that the electric motor is controlled so as to reduce the engine speed of the internal combustion engine or stop the operation of the internal combustion engine and compensate for the needed torque of the hybrid vehicle when the NOx reduction treatment is executed. In the first aspect of the invention, the electronic control unit may be configured to set the predetermined charging amount to a value equal to or larger than a value obtained by adding the power consumption amount to the lower limit value of the predetermined target charging amount range. According to the first aspect of the invention, the predetermined charging amount can be set, with higher accuracy, to the charging amount assuming that the charging amount of the battery is maintained at a value equal to or larger than the lower limit value of the predetermined target charging amount range, even when the control of the electric motor for the compensation of the needed torque is continued until the reduction of NOx in the NSR catalyst is completed.

In the first aspect of the invention, the electronic control unit may be configured to control the internal combustion engine such that a power generation amount obtained by the generator is increased in a predetermined period before the predetermined NOx reduction execution condition is satisfied compared to the power generation amount when the operational state of the internal combustion engine is the normal operation. According to the first aspect of the invention, the charging amount of the battery can be increased before the predetermined NOx reduction execution condition is satisfied. For that reason, the probability that the charging amount of the battery when the predetermined NOx reduction execution condition is satisfied becomes equal to or larger than the predetermined charging amount can be further increased. Accordingly, when the NOx reduction treatment is executed, the opportunity that the reduction in the engine speed of the internal combustion engine or the operation stop thereof and the control of the electric motor for the compensation of the needed torque are executed can be increased. Hence, it is possible to further suppress the amount of fuel to be consumed for reducing NOx stored in the NSR catalyst.

A second aspect of the invention relates to an exhaust gas control method for a hybrid vehicle. The hybrid vehicle includes an internal combustion engine as a power source, an electric motor as a power source, a generator, a battery, an electronic control unit, and a NOx storage-reduction catalyst. The internal combustion engine is configured to perform a lean burn operation. The generator is configured to generate electrical power with power output from the internal combustion engine. The battery is connected to the generator so as to be charged with the electrical power generated by the generator. The battery is connected to the electric motor so as to supply electrical power to the electric motor. The NOx storage-reduction catalyst is disposed in an exhaust passage of the internal combustion engine. The exhaust gas control method includes acquiring a charging amount of the battery using an electronic control unit; setting a value larger than a lower limit value of a predetermined target charging amount range and smaller than an upper limit value of the predetermined target charging amount range as a predetermined charging amount using the electronic control unit; controlling the internal combustion engine using the electronic control unit so as to execute NOx reduction treatment in which NOx stored in the NOx storage-reduction catalyst is reduced, when a predetermined NOx reduction execution condition is satisfied, the NOx reduction treatment being treatment in which fuel serving as a reducing agent is supplied to the NOx storage-reduction catalyst; controlling the internal combustion engine using the electronic control unit so as to reduce an engine speed of the internal combustion engine or stop operation of the internal combustion engine and controlling the electric motor by the electronic control unit so as to compensate for a needed torque of the hybrid vehicle when the NOx reduction treatment is executed when the charging amount of the battery when the predetermined NOx reduction execution condition is satisfied is equal to or larger than the predetermined charging amount; and controlling the internal combustion engine using the electronic control unit so as to maintain an operational state of the internal combustion engine at a normal operation when the NOx reduction treatment is executed when the charging amount of the battery when the predetermined NOx reduction execution condition is satisfied is smaller than the predetermined charging amount.

In the second aspect of the invention, the exhaust gas control method may further include estimating, by the electronic control unit, a power consumption amount that is electrical energy of the battery assumed to be consumed for driving the electric motor until reduction of NOx in the NOx storage-reduction catalyst is completed, when supposing that the electric motor is controlled so as to reduce the engine speed of the internal combustion engine or stop the operation of the internal combustion engine and compensate for the needed torque of the hybrid vehicle when the NOx reduction treatment is executed. The predetermined charging amount may be set to a value equal to or larger than a value obtained by adding the power consumption amount to the lower limit value of the predetermined target charging amount range.

In the second aspect of the invention, the exhaust gas control method may further include controlling the internal combustion engine by the electronic control unit such that a power generation amount obtained by the generator is increased in a predetermined period before the predetermined NOx reduction execution condition is satisfied compared to the power generation amount when the operational state of the internal combustion engine is the normal operation,.

According to the aspect of the invention, when the NOx catalyst is provided in the exhaust passage of the internal combustion engine in the hybrid vehicle, the suppression of the amount of fuel to be consumed for reducing NOx stored in the NSR catalyst, and the suppression of the deterioration of the exhaust gas components by unreacted fuel flowing out of the NSR catalyst can be made compatible with each other.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a view illustrating a schematic configuration of a hybrid system and an intake and exhaust system of an internal combustion engine related to an embodiment;
FIG. 2 is a time chart illustrating transitions of NOx storage amount in an NSR catalyst, the charging amount of a battery, the amount of fuel supply per unit time to the NSR catalyst, an air-fuel ratio within the NSR catalyst, the engine speed of the internal combustion engine, and HC outflow amount from the NSR catalyst when first NOx reduction treatment is executed;
FIG. 3 is a flowchart illustrating a flow of NOx reduction treatment related to Embodiment 1;
FIG. 4 is a time chart illustrating transitions of the NOx storage amount in the NSR catalyst, the charging amount of the battery, the amount of fuel supply per unit time to the NSR catalyst, the air-fuel ratio within the NSR catalyst, the engine speed of the internal combustion engine, and the HC outflow amount from the NSR catalyst when the NOx reduction treatment is executed in the flow illustrated in FIG. 3;
FIG. 5 is a block diagram for describing functional units in an ECU related to Embodiment 2;
FIG. 6 is a flowchart illustrating a flow of power generation amount increase control related to Embodiment 3; and
FIG. 7 is a time chart illustrating transitions of the NOx storage amount in the NSR catalyst, the charging amount of the battery, the amount of fuel supply per unit time to the NSR catalyst, the air-fuel ratio within the NSR catalyst, the engine speed of the internal combustion engine, and the HC outflow amount from the NSR catalyst when the power generation amount increase control related to Embodiment 3 is executed.

### DETAILED DESCRIPTION OF EMBODIMENTS

Hereinafter, specific embodiments of the invention will be described with reference to the drawings. The dimensions, materials, shapes, relative arrangement, and the like of components described in the present embodiments are not intended to limit the technical scope of the invention solely to the above-described ones unless otherwise specified.

### Embodiment 1

### Schematic Configuration of Hybrid System and Intake and Exhaust System of Internal Combustion Engine

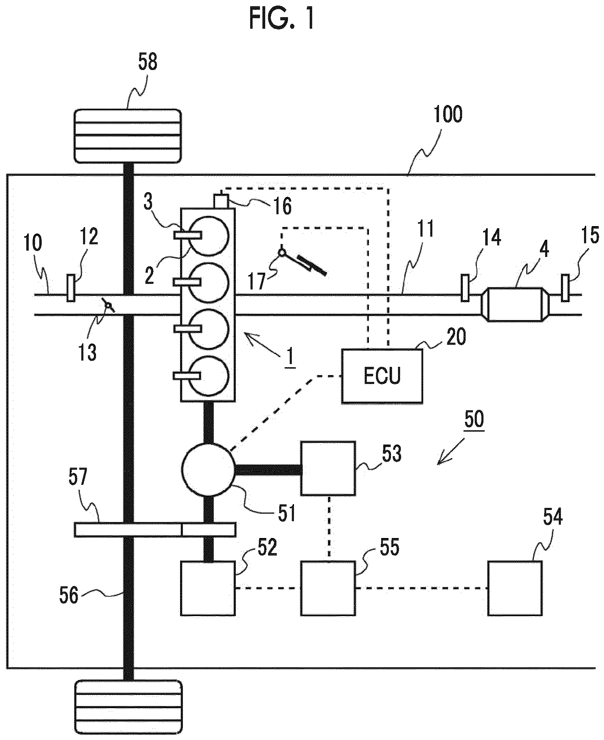

FIG. 1 is a view illustrating a schematic configuration of a hybrid system and an intake and exhaust system of an internal combustion engine related to a present embodiment. A hybrid system 50 mounted on a vehicle 100 includes an internal combustion engine 1, a power dividing mechanism 51, an electric motor 52, a generator 53, a battery 54, an inverter 55, and a speed reducer 57. The speed reducer 57 is connected to an axle 56 of the vehicle 100. Wheels 58 are connected to both ends of the axle 56.

The power dividing mechanism 51 allocates the output from the internal combustion engine 1, to the generator 53 or the axle 56. Then, the generator 53 generates electrical power with the power output from the internal combustion engine 1. The power dividing mechanism 51 also has a function of transmitting the output from the electric motor 52, to the axle 56. The electric motor 52 rotates at a rotating speed proportional to the rotating speed of the axle 56 via the speed reducer 57. Additionally, the battery 54 is connected to the electric motor 52 and the generator 53 via the inverter 55.

The inverter 55 converts the direct-current electric power supplied from the battery 54 into alternating-current electric power to supply the converted alternating-current electric power to the electric motor 52. Additionally, the inverter 55 converts the alternating-current electric power supplied from the generator 53 into direct-current electric power to supply the converted direct-current electric power to the battery 54. Accordingly, the battery 54 is charged.

In the hybrid system 50 configured as described above, the axle 56 is rotated by the output of the internal combustion engine 1 or the output of the electric motor 52. Additionally, the output of the internal combustion engine 1 and the output of the electric motor 52 can also be combined together to rotate the axle 56. That is, the electric motor 52 and the internal combustion engine 1 can also be used together as power sources of the vehicle 100. Moreover, a crankshaft of the internal combustion engine 1 can also be rotated by the output of the electric motor 52. That is, solely the electric motor 52 may be used as a power source of the vehicle 100. Additionally, during the deceleration of the vehicle 100, by operating the electric motor 52 as a generator with the rotative force of the axle 56, kinetic energy can be converted into electric energy and the battery 54 can also be made to recover the converted electrical energy.

Here, the internal combustion engine 1 is a diesel engine. The internal combustion engine 1 has four cylinders 2. Each cylinder 2 is provided with a fuel injection valve 3 that injects fuel directly into the cylinder 2. In addition, the internal combustion engine is not limited to the diesel engine and may be a gasoline engine performing a lean burn operation. An intake passage 10 and an exhaust passage 11 are connected to the internal combustion engine 1. The intake passage 10 is provided with an air flow meter 12 and a throttle valve 13. The air flow meter 12 detects the amount of intake air of the internal combustion engine 1. The throttle valve 13 adjusts the amount of intake air of the internal combustion engine 1.

The exhaust passage 11 is provided with an NSR catalyst 4. The exhaust passage 11 upstream of the NSR catalyst 4 is provided with an air-fuel ratio sensor 14. Additionally, the exhaust passage 11 downstream of the NSR catalyst 4 is provided with an exhaust gas temperature sensor 15. The air-fuel ratio sensor 14 detects the air-fuel ratio of exhaust gas (hereinafter, simply referred to as "inflow exhaust gas") that flows into the NSR catalyst 4. The exhaust gas temperature sensor 15 detects the temperature of the exhaust gas that has flowed out of the NSR catalyst 4.

The hybrid system 50 includes an electronic control unit (ECU) 20. The air flow meter 12, the air-fuel ratio sensor 14, and the exhaust gas temperature sensor 15 are electrically connected to the ECU 20. Moreover, a crank angle sensor 16 and a throttle valve opening degree sensor 17 are electrically connected to the ECU 20. The crank angle sensor 16 detects the crank angle of the internal combustion engine 1. The throttle valve opening degree sensor 17 detects the throttle valve opening degree of the vehicle 100. Also, output values of the above-described sensors are input to the ECU 20. The ECU 20 calculates the engine speed of the internal combustion engine 1 based on an output value of the crank angle sensor 16. Additionally, the ECU 20 calculates a needed torque that is the torque needed as a driving force of the vehicle 100 based on an output value of the throttle valve opening degree sensor 17.

During the operation of the internal combustion engine 1, the ECU 20 estimates the flow rate of the inflow exhaust gas based on a detection value of the air flow meter 12 and the amount of fuel injected from the fuel injection valve 3. Additionally, the ECU 20 estimates the temperature of the NSR catalyst 4 based on a detection value of the exhaust gas temperature sensor 15. Moreover, the ECU 20 integrates electrical energy (power generation amount by the generator 53 or the electric motor 52) to be supplied to the battery 54 and electrical energy (electrical energy consumed for the driving of the electric motor 52) released from the battery 54 as needed, thereby estimating the charging amount of the battery 54. Additionally, the electric motor 52, the power dividing mechanism 51, the fuel injection valves 3, and the throttle valve 13 are electrically connected to the ECU 20. The above-described devices are controlled by the ECU 20. For example, the ECU 20 adjusts the power generation amount obtained by the generator 53 by controlling the output of the internal combustion engine 1 such that the charging amount of the battery 54 is maintained within a predetermined target charging amount range. In addition, the predetermined target charging amount range is set in advance based on experiment or the like as a range of a charging amount suitable for the battery 54.

### NOx Reduction Treatment

During the operation of the internal combustion engine 1, the ECU 20 estimates NOx storage amount in the NSR catalyst 4 as needed based on the amount of fuel injected from each fuel injection valve 3, the flow rate of the inflow exhaust gas, the air-fuel ratio of the inflow exhaust gas, the temperature of the NSR catalyst 4, and the like. In the present embodiment, when the NOx storage amount estimated by the ECU 20 reaches the first predetermined storage amount, the ECU 20 executes the NOx reduction treatment so as to recover the NOx storage capacity of the NSR catalyst 4. The NOx reduction treatment is realized by executing subsidiary fuel injection in addition to main fuel injection executed by each fuel injection valve 3 at a time near a compression top dead center in each cylinder 2 of the internal combustion engine 1, and thereby supplying fuel serving as a reducing agent to the NSR catalyst 4. In addition, the subsidiary fuel injection herein is fuel injection executed at a time after the main fuel injection in one combustion cycle and at a time such that injected fuel is not supplied to combustion within the cylinder 2 that contributes to engine output. In this case, subsidiary fuel injection amount is adjusted such that the air-fuel ratio within the NSR catalyst 4 becomes a rich air-fuel ratio that allows reduction of NOx stored in the NSR catalyst 4. Additionally, the first predetermined storage amount is determined in advance based on experiment or the like as a threshold value of the NOx storage amount at which the recovery of the NOx storage capacity of the NSR catalyst 4 should be recovered.

Moreover, in the present embodiment, when the NOx reduction treatment is executed, there is a case where the operation of the internal combustion engine 1 is stopped and the electric motor 52 is controlled to compensate the needed torque. In the above-described case, the operation of the internal combustion engine 1 is stopped after a predetermined amount of fuel is supplied to the NSR catalyst 4 by executing the subsidiary fuel injection in addition to the main fuel injection in each cylinder 2. In addition, the operation stop of the internal combustion engine 1 herein is stopping the fuel injection from each fuel injection valve 3 to set the engine speed to 0. The needed torque according to the throttle valve opening degree is compensated for by driving the electric motor 52 (that is, the electric motor 52 is controlled such that the needed torque is generated with the electric motor 52). Hereinafter, the NOx reduction treatment in which the operation stop of the internal combustion engine 1 and the driving of the electric motor 52 are executed together with the supply of fuel to the NSR catalyst 4 is referred to as "first NOx reduction treatment".

A predetermined supply amount that is a total amount of the fuel to be supplied to the NSR catalyst 4 as the reducing agent in the first NOx reduction treatment as the amount of fuel that is enough to reduce the first predetermined storage amount of NOx stored in the NSR catalyst 4 in a state where the internal combustion engine 1 is stopped is set. Herein when the first NOx reduction treatment is executed, the operation of the internal combustion engine 1 is stopped after fuel is supplied to the NSR catalyst 4. Therefore, no exhaust gas newly flows into the NSR catalyst 4. Then, the amount of oxygen to be supplied to the NSR catalyst 4 decreases compared to a case where the operation of the internal combustion engine 1 is continued, and the amount of heat taken away by the exhaust gas from the NSR catalyst 4 also decreases. For that reason, it is possible to more efficiently reduce NOx stored in the NSR catalyst 4 compared to a case where the NOx reduction treatment is executed in a state where the operation of the internal combustion engine 1 is continued. That is, it is possible to reduce the first predetermined storage amount of NOx with a smaller amount of fuel. The predetermined supply amount in the first NOx reduction treatment is determined in advance based on experiment or the like in consideration of the above points.

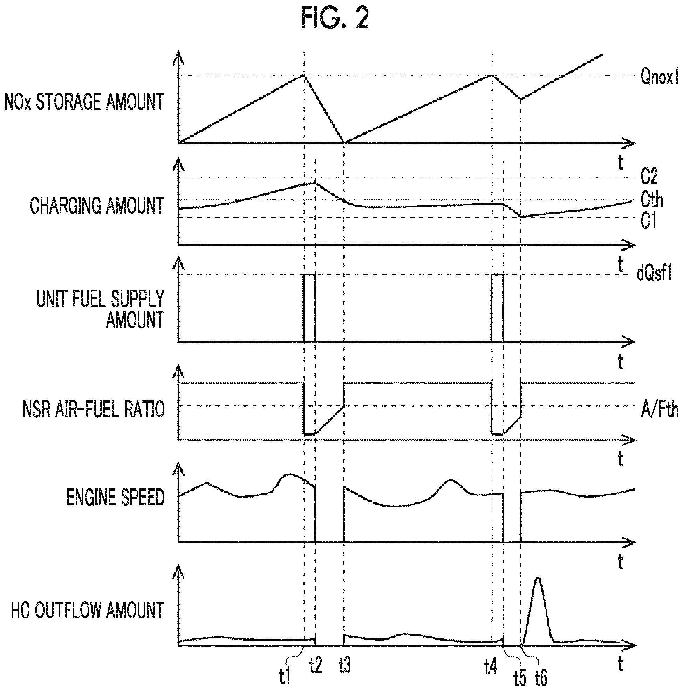

Here, transitions of the NOx storage amount in the NSR catalyst, the charging amount of the battery, the amount of fuel supply per unit time to the NSR catalyst (hereinafter, may be referred to as "unit fuel supply amount"), the air-fuel ratio within the NSR catalyst (hereinafter, may be referred to as a "NSR air-fuel ratio"), the engine speed of the internal combustion engine, and the HC outflow amount from the NSR catalyst when the first NOx reduction treatment is executed will be described based on a time chart illustrated in FIG. 2. Qnox1 in the NOx storage amount (the NOx storage amount in the NSR catalyst 4) on the time chart illustrated in FIG. 2 represents the first predetermined storage amount. Additionally, A/Fth in the NSR air-fuel ratio on the time chart illustrated in FIG. 2 represents a stoichiometric air-fuel ratio. Additionally, in the charging amount (charging amount of a battery 54) in FIG. 2, C1 represents a lower limit value of the predetermined target charging amount range, and C2 represents an upper limit value of the predetermined target charging amount range. Additionally, in the charging amount in FIG. 2, Cth represents a predetermined charging amount. The predetermined charging amount Cth is a value larger than the lower limit value C1 of the predetermined target charging amount range and smaller than the upper limit value C2 of the predetermined target charging amount range. The details of the predetermined charging amount Cth will be described below. In addition, FIG. 2 illustrates the transitions of the respective parameters when the needed torque according to the throttle valve opening degree belongs to, normally, a region having the internal combustion engine 1 as a power source of the vehicle 100 (that is, a region where the electric motor 52 is stopped).

In FIG. 2, the internal combustion engine 1 is operated in normal operation until time t1. Then, at time t1, the NOx storage amount in the NSR catalyst 4 reaches the first predetermined storage amount Qnox1. For that reason, at time t1, in order to reduce NOx stored in the NSR catalyst 4, the supply of fuel to the NSR catalyst 4 is started by executing the subsidiary fuel injection in addition to the main fuel injection in each cylinder 2. Accordingly, the NSR air-fuel ratio becomes a rich air-fuel ratio. Then, since NOx starts to be reduced in the NSR catalyst 4, the NOx storage amount in the NSR catalyst 4 starts to decrease from time t1. In addition, as illustrated in FIG. 2, the charging amount of the battery 54 at time t1 becomes equal to or larger than the predetermined charging amount Cth. Thereafter, when the total amount of fuel supplied to the NSR catalyst 4 reaches the predetermined supply amount at time t2, the operation of the internal combustion engine 1 is stopped (that is, the supply of fuel to the NSR catalyst 4 is also stopped). For that reason, at time t2, the engine speed of the internal combustion engine 1 reaches 0. Then, at time t2, the driving of the electric motor 52 for compensating for the needed torque according to the throttle valve opening degree is started. For that reason, the charging amount of the battery 54 starts to decrease from time t2. Then, at time t3, the NOx storage amount in the NSR catalyst 4 reaches 0, that is, the NOx reduction in the NSR catalyst 4 is completed. At this time, a state where almost all of the fuel supplied to the NSR catalyst 4 between time t1 and time t2 is consumed for NOx reduction is brought about. That is, at time t3, a state where unreacted fuel is not substantially present in the NSR catalyst 4 is brought about. For that reason, at time t3, the NSR air-fuel ratio has a value near the stoichiometric air-fuel ratio A/Fth. Then, at time t3, the driving of the electric motor 52 is stopped, and the operation of the internal combustion engine 1 is resumed.

Here, since the electric motor 52 is driven in order to compensate for the needed torque from time t2 to time t3 during which the operation of the internal combustion engine 1 is stopped, the charging amount of the battery 54 decreases. However, as illustrated in FIG. 2, even at time t3, the charging amount of the battery 54 is maintained at a value equal to or larger than the lower limit value C1 of the predetermined target charging amount range. This is because the charging amount of the battery 54 at time t1 becomes equal to or larger than the predetermined charging amount Cth. That is, this is because the battery 54 is brought into a sufficiently charged state when the driving of the electric motor 52 for compensating for the needed torque is started.

Then, in FIG. 2, the operation of the internal combustion engine 1 in the normal operation is resumed from time t3, and the NOx storage amount in the NSR catalyst 4 reaches the first predetermined storage amount Qnox1 again at time t4. Thus, from time t4 to time t5, the subsidiary fuel injection is executed in each cylinder 2, and thereby, the predetermined supply amount of fuel is supplied to the NSR catalyst 4. Then, at time t5, the operation of the internal combustion engine 1 is stopped, and the driving of the electric motor 52 for compensating for the needed torque is started. However, unlike time t1, the charging amount of the battery 54 is less than the predetermined charging amount Cth at time t4. Therefore, at time t6 before the NOx storage amount in the NSR catalyst 4 reaches substantially 0, that is, before the NOx reduction in the NSR catalyst 4 is completed, the charging amount of the battery 54 will decrease to the lower limit value C1 of the predetermined target charging amount range. Then, in order to maintain the charging amount of the battery 54 at the predetermined target charging amount range, at time t6, the driving of the electric motor 52 is stopped, and the operation of the internal combustion engine 1 is resumed. In the above-described case, at a time point of time t6, unreacted fuel remains in the NSR catalyst 4. That is, at time t6, the operation of the internal combustion engine 1 is resumed in a state where unreacted fuel is present in the NSR catalyst 4. Then, the unreacted fuel present in the NSR catalyst 4 flows out of the NSR catalyst 4 together with exhaust gas. For that reason, in FIG. 2, the outflow amount of HC that is the unreacted fuel from the NSR catalyst 4 significantly increases immediately after time t6.

As described above, when the first NOx reduction treatment is executed, when the charging amount of the battery 54 is insufficient at the time when the operation of the internal combustion engine 1 is stopped and the driving of the electric motor 52 is started, there is a case where there is a need for resuming the operation of the internal combustion engine 1 before the NOx reduction in the NSR catalyst 4 is completed. Also, in the case as described above, there is a possibility that exhaust gas components may deteriorate because unreacted fuel flows out of the NSR catalyst 4.

In the present embodiment, even when the driving of the electric motor 52 for the compensation of the needed torque in the first NOx reduction treatment is continued until the reduction of NOx in the NSR catalyst 4 is completed, the predetermined charging amount Cth is set in advance as a threshold value of the charging amount assuming that the charging amount of the battery 54 can be maintained at a value equal to or larger than the lower limit value C1 of the predetermined target charging amount range. In addition, power consumption amount, which is the electrical energy of the battery consumed in a period during which the electric motor 52 is driven for the compensation of the needed torque, fluctuates depending on how the needed torque transits in the period. In the present embodiment, the predetermined charging amount Cth is set as a constant value based on experiment or the like such that the predetermined charging amount Cth becomes a sufficient amount even when the above points are taken into consideration. In the present embodiment, whether or not the operation stop of the internal combustion engine 1 and the driving of the electric motor 52 for compensating for the needed torque is executed when the NOx reduction treatment is executed is determined based on whether or not the charging amount of the battery 54 at the time when the NOx storage amount in the NSR catalyst 4 reaches the first predetermined storage amount Qnox1 is equal to or larger than the predetermined charging amount Cth.

### Flow of NOx Reduction Treatment

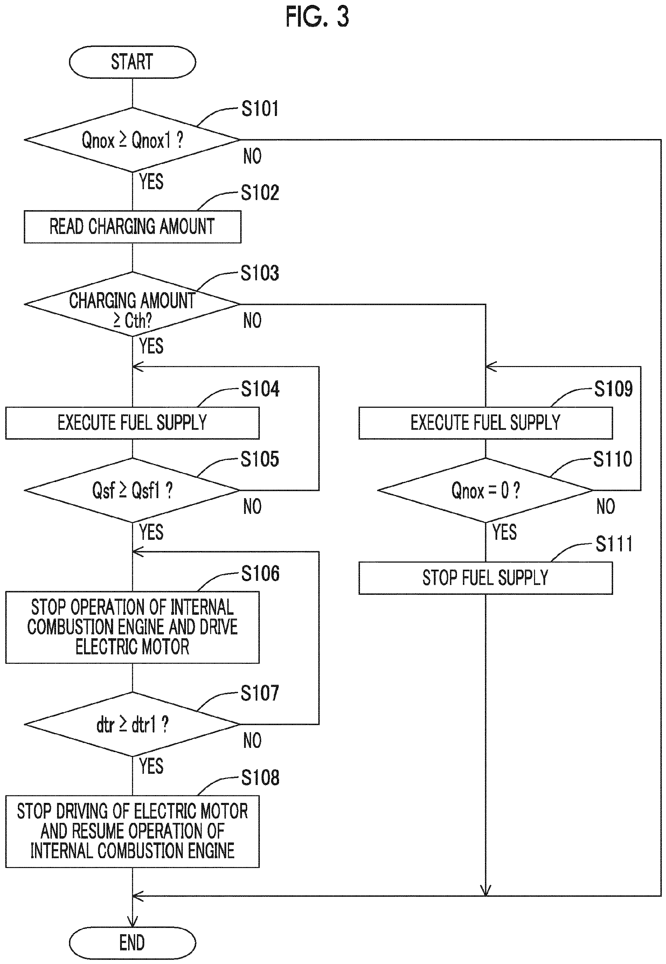

Hereinafter, the flow of the NOx reduction treatment related to the present embodiment will be described based on a flowchart illustrated in FIG. 3. A main flow is realized by executing a program stored in advance in the ECU 20.

The execution of the main flow is started during the operation of the internal combustion engine 1. As described above, during the operation of the internal combustion engine 1, the NOx storage amount of the NSR catalyst 4 is estimated as needed by the ECU 20. Then, in S101 of the main flow, whether or not the NOx storage amount Qnox in the NSR catalyst 4 estimated by the ECU 20 becomes equal to or larger than the first predetermined storage amount Qnox1 is determined. In addition, in the present embodiment, the NOx storage amount Qnox in the NSR catalyst 4 reaching the first predetermined storage amount Qnox1 is an example of "a predetermined NOx reduction execution condition". However, the "predetermined NOx reduction execution condition" is not limited to this. For example, when the NOx reduction treatment is executed whenever the integrated value of the fuel injection amount in the internal combustion engine 1 reaches a predetermined threshold value, the integrated value of the fuel injection amount in the internal combustion engine 1 from the end of execution of previous NOx reduction treatment reaches a predetermined threshold value may be a NOx reduction execution condition. Additionally, in a configuration in which the exhaust passage 11 downstream of the NSR catalyst 4 is provided with a NOx sensor, an output value of the NOx sensor reaching the predetermined threshold value may be the NOx reduction execution condition. Additionally, whether or not the NOx reduction execution condition is satisfied may be determined in consideration of the temperature of the NSR catalyst 4 or the flow rate of the inflow exhaust gas.

When a negative determination is made in S101, the execution of the main flow is temporarily ended. On the other hand, when a positive determination is made in S101, next, in S102, the charging amount of the battery 54 at the time when the NOx storage amount Qnox in the NSR catalyst 4 reaches the first predetermined storage amount Qnox1 is read. In addition, as described above, in the present embodiment, the charging amount of the battery 54 is estimated as needed by the ECU 20.

Next, in S103, whether or not the charging amount of the battery 54 read in S102 is equal to or larger than the predetermined charging amount Cth set as described above is determined. Then, when a positive determination is made in S103, the first NOx reduction treatment is executed. In the above-described case, in S104, the supply of fuel to the NSR catalyst 4 is executed by the subsidiary fuel injection being executed in addition to the main fuel injection in each cylinder 2. In addition, in this case, the subsidiary fuel injection amount is adjusted such that the unit amount of fuel supplied to the NSR catalyst 4 becomes a first predetermined unit supply amount dQsf1. Here, the first predetermined unit supply amount dQsf1 is set to a value larger than the unit amount of fuel supplied to the NSR catalyst 4 when the operation of the internal combustion engine 1 is continued, even when the NOx reduction treatment is executed, as will be described below. Next, in S105, whether or not the total amount Qsf of the supply of fuel to the NSR catalyst 4 since the start of the supply of fuel to the NSR catalyst 4 (that is, after the execution of the subsidiary fuel injection is started) becomes equal to or larger than the first fuel supply amount Qsf1 is determined. When a negative determination is made in S105, the processing of S104 is executed again. That is, the supply of fuel to the NSR catalyst 4 is continued.

On the other hand, when a positive determination is made in S105, next, in S106, the operation of the internal combustion engine 1 is stopped, and the driving of the electric motor 52 for compensating for the needed torque is executed. Next, in S107, whether or not the elapsed time dtr since the start of the supply of fuel to the NSR catalyst 4 in S104 (that is, the length of a period during which NOx reduction is performed in the NSR catalyst 4) becomes equal to or larger than a predetermined time dtrl is determined. Here, the predetermined time dtrl is a predetermined period based on experiment or the like as a sufficient period needed to complete the NOx reduction in the NSR catalyst 4 by the execution of the first NOx reduction treatment. In addition, NOx reduction speed in the NSR catalyst 4 varies in accordance with the temperature of the NSR catalyst 4. For that reason, the predetermined time dtrl may be set based on the temperature of the NSR catalyst 4 at the time of the start of execution of the first NOx reduction treatment. Moreover, the temperature transition of the NSR catalyst 4 in an execution period of the first NOx reduction treatment may be estimated, and the predetermined time dtrl may be set in consideration of an estimated value of the temperature transition. Then, when a positive determination is made in S107, the driving of the electric motor 52 is stopped, and the operation of the internal combustion engine 1 is resumed. Then, the main flow is ended. On the other hand, when a negative determination is made in S107, the processing of S106 is executed again. That is, the operation stop of the internal combustion engine 1 and the driving of the electric motor 52 are continued.

On the other hand, in a case where a negative determination is made in S103, the NOx reduction treatment is executed while maintaining the operational state of the internal combustion engine 1 at the normal operation (that is, without executing the operation stop of the internal combustion engine 1 and the driving of the electric motor 52). Hereinafter, the NOx reduction treatment as described above is referred to as "second NOx reduction treatment". When the second NOx reduction treatment is executed, in S109, the supply of fuel to the NSR catalyst 4 is executed by the subsidiary fuel injection being executed in addition to the main fuel injection in each cylinder 2. In this case, the subsidiary fuel injection amount is adjusted such that the unit amount of fuel supplied to the NSR catalyst 4 becomes a second predetermined unit supply amount dQsf2. Here, the second predetermined unit supply amount dQsf2 is set such that the NSR air-fuel ratio becomes a rich air-fuel ratio capable of reducing NOx stored in the NSR catalyst 4, in a state where the exhaust gas discharged from the internal combustion engine 1 is flowing. However, as described above, the second predetermined unit supply amount dQsf2 is set to a value smaller the first predetermined unit supply amount dQsf1 at the time when the supply of fuel to the NSR catalyst 4 is executed in S104.

Here, since the operation of the internal combustion engine 1 is continued when the second NOx reduction treatment is executed, the estimation of the NOx storage amount in the NSR catalyst 4 by the ECU 20 is also continued. Then, subsequent to S109, in S110, whether or not the NOx storage amount Qnox in the NSR catalyst 4 at the current point of time reaches zero is determined. That is, in S110, whether or not the NOx reduction is completed in the NSR catalyst 4 is determined. In addition, a threshold value for the above determination is not necessarily zero. That is, in S110, whether or not the NOx storage amount Qnox in the NSR catalyst 4 at the current point of time is equal to or lower than a predetermined reduction completion threshold value may be determined.

Then, when a negative determination is made in S110, the NOx reduction can be determined to be continuing in the NSR catalyst 4. For that reason, in the above-described case, the processing of S109 is executed again. That is, the supply of fuel to the NSR catalyst 4 is continued. On the other hand, when a positive determination is made in S110, the NOx reduction can be determined to have been completed in the NSR catalyst 4. For that reason, in the above-described case, in Sill, the supply of fuel to the NSR catalyst 4 is stopped by the subsidiary fuel injection in each cylinder 2 being stopped. Then, the main flow is ended. In addition, as described above, according to the first NOx reduction treatment, NOx stored in the NSR catalyst 4 can be reduced more efficiently than in the second NOx reduction treatment. In other words, when the same amount of NOx is reduced, there is a need for supplying more fuel to the NSR catalyst 4 in the second NOx reduction treatment than in the first NOx reduction treatment. For that reason, the total amount of fuel supplied to the NSR catalyst 4 when executing the second NOx reduction treatment becomes larger than the first fuel supply amount Qsf1 in the first NOx reduction treatment.

The above-described flow is a flow executed on the premise that the needed torque according to the throttle valve opening degree belongs to the region having the internal combustion engine 1 as a power source of the vehicle 100. Hence, for example, when the needed torque according to the throttle valve opening degree transits to the region having solely the electric motor 52 as a power source of the vehicle 100 when a positive determination is made in S107, the processing of S108 is not executed, and the driving of the electric motor 52 is continued while the operation of the internal combustion engine 1 is stopped.

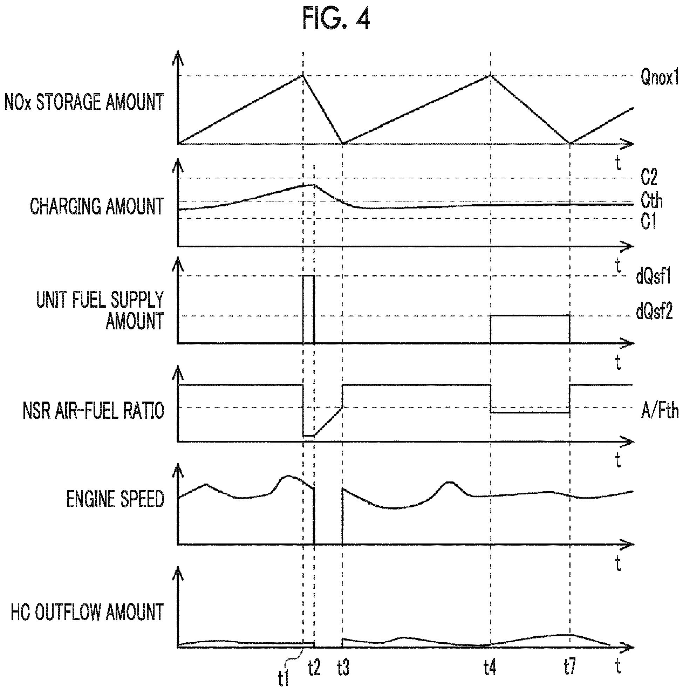

Next, transitions of the NOx storage amount in the NSR catalyst, the charging amount of the battery, the unit amount of fuel supplied to the NSR catalyst, the NSR air-fuel ratio, the engine speed of the internal combustion engine, and the HC outflow amount from the NSR catalyst when the NOx reduction treatment is executed in the above-described flow will be described with reference to a time chart illustrated in FIG. 4. In addition, similar to FIG. 2, FIG. 4 also illustrates the transitions of the respective parameters when the needed torque according to the throttle valve opening degree belongs to the region having the internal combustion engine 1 as a power source of the vehicle 100.

Even in the time chart illustrated in FIG. 4, the values of the respective parameters transit similarly to the time chart illustrated in FIG. 2 before time t4. Then, in FIG. 4, at time t4, when the NOx storage amount in the NSR catalyst 4 reaches the first predetermined storage amount Qnox1 again, the charging amount of the battery 54 at that time is smaller than the predetermined charging amount Cth. Therefore, the second NOx reduction treatment is executed. That is, from time t4, the supply of fuel to the NSR catalyst 4 having the unit fuel supply amount as a second unit supply amount is started. Accordingly, the NSR air-fuel ratio becomes a rich air-fuel ratio. Then, since NOx starts to be reduced in the NSR catalyst 4, the NOx storage amount starts to decrease. However, the NSR air-fuel ratio in this case is higher than the NSR air-fuel ratio in the period from time t1 to time t2 during which the first NOx reduction treatment is executed. Then, the operation of the internal combustion engine 1 is continued after time t4. Additionally, since the electric motor 52 is not driven after time t4, the charging amount of the battery 54 does not decrease. Then, at time t7, when the NOx storage amount in the NSR catalyst 4 reaches 0 (or when the NOx storage amount in the NSR catalyst 4 is equal to or lower than the predetermined reduction completion threshold value), the supply of fuel to the NSR catalyst 4 is stopped. In the above-described case, in FIG. 2, a significant increase in the HC outflow amount from the NSR catalyst 4 as illustrated immediately after time t6 does not occur.

As described above, in the present embodiment, when the charging amount of the battery 54 at the time when the NOx storage amount Qnox in the NSR catalyst 4 reaches the first predetermined storage amount Qnox1 is equal to or larger than the predetermined charging amount Cth, the first NOx reduction treatment is executed. Accordingly, the total amount of the fuel to be supplied to the NSR catalyst 4 (the total amount of the subsidiary fuel injection amount) for the NOx reduction can be reduced compared to a case where the second NOx reduction treatment is executed. Hence, the amount of fuel to be consumed for reducing NOx stored in the NSR catalyst 4 can be further suppressed.

On the other hand, in the present embodiment, the second NOx reduction treatment is executed when the charging amount of the battery 54 at the time when the NOx storage amount in the NSR catalyst 4 reaches the first predetermined storage amount Qnox1 is smaller than the predetermined charging amount Cth. Hence, a situation where the charging amount of the battery 54 falls below the lower limit value C1 of the predetermined target charging amount range before the NOx reduction in the NSR catalyst 4 is completed during the operation stop of the internal combustion engine 1 and the execution of the driving of the electric motor 52 occurs is further suppressed. That is, a situation in which the driving of the electric motor 52 is stopped and the operation of the internal combustion engine 1 is resumed in a state where unreacted fuel is present in the NSR catalyst 4 is further suppressed. For that reason, a situation in which unreacted fuel flows out of the NSR catalyst 4 with the resumption of the operation of the internal combustion engine 1 can be further suppressed. Therefore, deterioration of exhaust gas components can be further suppressed.

Hence, according to the present embodiment, the suppression of the amount of fuel to be consumed for reducing NOx stored in the NSR catalyst 4, and the suppression of the deterioration of the exhaust gas components by unreacted fuel flowing out of the NSR catalyst can be made compatible with each other.

As described above, the power consumption amount in a period during which the electric motor 52 is driven for the compensation of the needed torque fluctuates depending on how the needed torque transits in the period. For that reason, even when the charging amount of the battery 54 at the time when the NOx storage amount Qnox in the NSR catalyst 4 reaches the first predetermined storage amount Qnox1 is equal to or larger than the predetermined charging amount Cth (that is, even when a positive determination is made in S103 in the flow illustrated in FIG. 3), there is also a possibility that the charging amount of the battery 54 falls below the lower limit value C1 of the predetermined target charging amount range before the elapsed time dtr since the start of the supply of fuel to the NSR catalyst 4 reaches the predetermined time dtrl. Thus, when a negative determination is made in S107 in the flow illustrated in FIG. 3, whether or not the charging amount of the battery 54 at the current point of time is smaller than the lower limit value C1 of the predetermined target charging amount range may be determined. When a negative determination is made in this case, the processing of S106 is executed. On the other hand, when a positive determination is made in this case, the processing of S108 is executed to control the charging amount of the battery 54 to be in the predetermined target charging amount range. In the case as described above, before the elapsed time dtr since the start of the supply of fuel to the NSR catalyst 4 reaches the predetermined time dtrl, the driving of the electric motor 52 is stopped, and the operation of the internal combustion engine 1 is resumed.

### Modification Example 1

Next, a modification example of the present embodiment will be described. In the above embodiment, a case where the aspect of the invention is applied when the NOx reduction treatment is executed when solely the internal combustion engine 1 is used as a power source of the vehicle 100 has been described as an example. However, the invention can also be applied to the execution of the NOx reduction treatment when the internal combustion engine 1 and the electric motor 52 are used together as power sources of the vehicle 100. In the above-described case, when the internal combustion engine 1 and the electric motor 52 are used together as power sources of the vehicle 100, and when the NOx storage amount Qnox in the NSR catalyst 4 reaches the first predetermined storage amount Qnox1, which of the first NOx reduction treatment or the second NOx reduction treatment is to be executed is selected based on whether or not the charging amount of the battery 54 at that time is equal to or larger than the predetermined charging amount Cth. Even in the above-described case, when the first NOx reduction treatment is executed, the electric motor 52 is controlled to compensate for the needed torque. That is, the output of the electric motor 52 is increased compared to a case where the ratios of the output of the internal combustion engine 1 and the output of the electric motor 52 with respect to the needed torque are controlled as usual. Meanwhile, when the second NOx reduction treatment is executed, a state where the ratios of the output of the internal combustion engine 1 and the output of the electric motor 52 with respect to the needed torque are controlled as usual is maintained.

### Modification Example 2

In the first NOx reduction treatment in the above embodiment, the operation of the internal combustion engine 1 is stopped after the supply of fuel to the NSR catalyst 4 is executed. However, in the first NOx reduction treatment, the operation of the internal combustion engine 1 is not necessarily stopped, and the engine speed of the internal combustion engine 1 may be reduced compared to that during the normal operation while continuing the operation of the internal combustion engine 1. In addition, as a matter of course, even in the above-described case, the electric motor 52 is controlled in order to compensate for a decrease in the torque accompanying the reduction in the engine speed of the internal combustion engine 1.

When the engine speed of the internal combustion engine 1 is reduced, the flow rate of the exhaust gas that flows into the NSR catalyst 4 decreases compared to a case where the operational state of the internal combustion engine 1 is maintained at the normal operation. Then, the amount of oxygen to be supplied to the NSR catalyst 4 decreases compared to a case where the operational state of the internal combustion engine 1 is maintained at the normal operation, and the amount of heat taken away by the exhaust gas from the NSR catalyst 4 also decreases. Hence, even when the engine speed of the internal combustion engine 1 is reduced in the first NOx reduction treatment, it is possible to more efficiently reduce NOx stored in the NSR catalyst 4 compared to the second NOx reduction treatment in which the operational state of the internal combustion engine 1 is maintained at the normal operation. In addition, in the above-described case, the predetermined supply amount is set to such an amount that NOx of the first predetermined storage amount is reduced in a state where the engine speed of the internal combustion engine 1 is reduced.

Additionally, in the first NOx reduction treatment, when the engine speed of the internal combustion engine 1 is reduced compared to that during the normal operation without stopping the operation of the internal combustion engine 1, the predetermined supply amount of fuel may be supplied to the NSR catalyst 4 after the start of execution of the driving of the electric motor 52 for compensating for the reduction in the engine speed of the internal combustion engine 1 and the needed torque. That is, after the engine speed of the internal combustion engine 1 is reduced, fuel may be supplied to the NSR catalyst 4 by executing the subsidiary fuel injection in addition to the main fuel injection in each cylinder 2.

### Modification Example 3

In the configuration illustrated in FIG. 1, the exhaust passage 11 upstream of the NSR catalyst 4 may be provided with a fuel addition valve that adds fuel during exhaust. Also, when the first and second NOx reduction treatments are executed, fuel may be supplied to the NSR catalyst 4 by adding fuel from the fuel addition valve instead of the above-described subsidiary fuel injection in each cylinder 2. Additionally, the fuel addition valve immediately upstream of the NSR catalyst 4 in the exhaust passage 11 such that the fuel added from the fuel addition valve reaches the NSR catalyst 4 even in a state where exhaust gas is not flowing into the exhaust passage 11 may be provided. According to the configuration as described above, even when the operation of the internal combustion engine 1 is stopped in the first NOx reduction treatment, the predetermined supply amount of fuel can be supplied to the NSR catalyst 4 by adding fuel from the fuel addition valve after the operation stop of the internal combustion engine 1.

### Embodiment 2

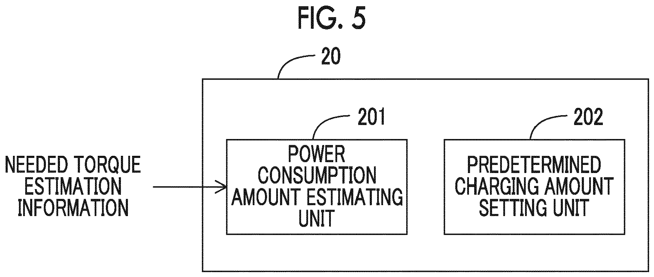

A schematic configuration of a hybrid system and an intake and exhaust system of an internal combustion engine related to the present embodiment is the same as that of Embodiment 1. However, in the present embodiment, as illustrated in FIG. 5, the ECU 20 is different from that of Embodiment 1 in that the ECU 20 has a power consumption amount estimating unit 201 and a predetermined charging amount setting unit 202 as its functional units.

In Embodiment 1, when the NOx storage amount Qnox in the NSR catalyst 4 becomes equal to or larger than the first predetermined storage amount Qnox1, the predetermined charging amount Cth that is the threshold value of the charging amount of the battery 54 for selecting which of the first NOx reduction treatment or the second NOx reduction treatment is to be executed is set to a predetermined constant value. Here, as described above, the power consumption amount, which is the electrical energy of the battery 54 consumed in the period during which the electric motor 52 is driven for the compensation of the needed torque, fluctuates depending on how the needed torque transits in the period. For that reason, when the predetermined charging amount Cth is made to have the constant value as in Embodiment 1, even when the charging amount of the battery 54 at the time when the NOx storage amount Qnox in the NSR catalyst 4 reaches the first predetermined storage amount Qnox1 is equal to or larger than the predetermined charging amount Cth, there is a possibility that the charging amount of the battery 54 falls below the lower limit value C1 of the predetermined target charging amount range before the NOx reduction in the NSR catalyst 4 is completed when the first NOx reduction treatment is executed.

In the present embodiment, when the NOx storage amount Qnox in the NSR catalyst 4 becomes equal to or larger than the first predetermined storage amount Qnox1, the first NOx reduction treatment is executed. Accordingly, the power consumption amount estimating unit 201 estimates the power consumption amount when supposing that the driving of the electric motor 52 for the compensation of the needed torque is continued until the reduction of NOx in the NSR catalyst 4 is completed. In more detail, in the present embodiment, needed torque estimated information that is information on transition estimation of a needed torque hereafter is input to the power consumption amount estimating unit 201 from an external device. As the external device that provides the power consumption amount estimating unit 201 with the needed torque estimated information, a car navigation device mounted on the vehicle 100 can be exemplified. In the above-described case, a guide path of the vehicle 100 derived from the car navigation device is input to the power consumption amount estimating unit 201 as the needed torque estimated information. Then, the power consumption amount estimating unit 201 estimates the transition of the needed torque hereafter based on the input guide path of the vehicle 100. Moreover, the power consumption amount estimating unit 201 calculates the power consumption amount based on the transition of the estimated needed torque. Additionally, the information provided by an intelligent transport system (ITS) can also be used as the needed torque estimated information.

Also, the predetermined charging amount setting unit 202 sets, as the predetermined charging amount Cth, a value obtained by adding the power consumption amount estimated by the power consumption amount estimating unit 201 to the lower limit value C1 of the predetermined target charging amount range, or a value obtained by further adding a predetermined amount or an amount equivalent to a predetermined ratio to the added value. In addition, the estimation of the power consumption amount by the power consumption amount estimating unit 201 and the setting of the predetermined charging amount Cth by the predetermined charging amount setting unit 202 as described above are executed before the processing of S103 is executed when a positive determination is made in S101 of the flow illustrated in FIG. 3. Then, the set predetermined charging amount Cth is applied to the processing of the flow of S103 illustrated in FIG. 3.

According to the present embodiment, the predetermined charging amount Cth can be set with higher accuracy than a charging amount assuming that the charging amount of the battery 54 is maintained at a value equal to or larger than the lower limit value C1 of the predetermined target charging amount range even when the driving of the electric motor 52 for the compensation of the needed torque is continued until the reduction of NOx in the NSR catalyst 4 is completed. For that reason, it is possible to separately use the first NOx reduction treatment and the second NOx reduction treatment more appropriately.

### Embodiment 3

A schematic configuration of a hybrid system and an intake and exhaust system of an internal combustion engine related to the present embodiment is the same as that of Embodiment 1. Additionally, even in the present embodiment, the first NOx reduction treatment or the second NOx reduction treatment is selectively executed in accordance with whether or not the charging amount of the battery 54 at the time when the NOx storage amount in the NSR catalyst 4 reaches the first predetermined storage amount is equal to or larger than the predetermined charging amount Cth.

### Power Generation Amount Increase Control

Here, as described above, according to the first NOx reduction treatment, NOx stored in the NSR catalyst 4 can be reduced more efficiently than in the second NOx reduction treatment. For that reason, when the opportunity that the first NOx reduction treatment is executed is increased when NOx stored in the NSR catalyst 4 is to be reduced, the amount of fuel consumed for the reduction of NOx can be further suppressed. Thus, in the present embodiment, the power generation amount increase control, which is the control of increasing the output of the internal combustion engine 1 compared to that during the normal operation, thereby increasing the power generation amount obtained by the generator 53, from the time when the NOx storage amount in the NSR catalyst 4 reaches a second predetermined storage amount smaller than the first predetermined storage amount, is executed. Here, the second predetermined storage amount herein is determined in advance based on experiment or the like as a threshold value of the NOx storage amount that can be determined that a possibility that the NOx storage amount in the NSR catalyst 4 reaches the first predetermined storage amount is high, when the NOx storage amount in the NSR catalyst 4 reaches the second predetermined storage amount, and then, when a certain period of time has elapsed.

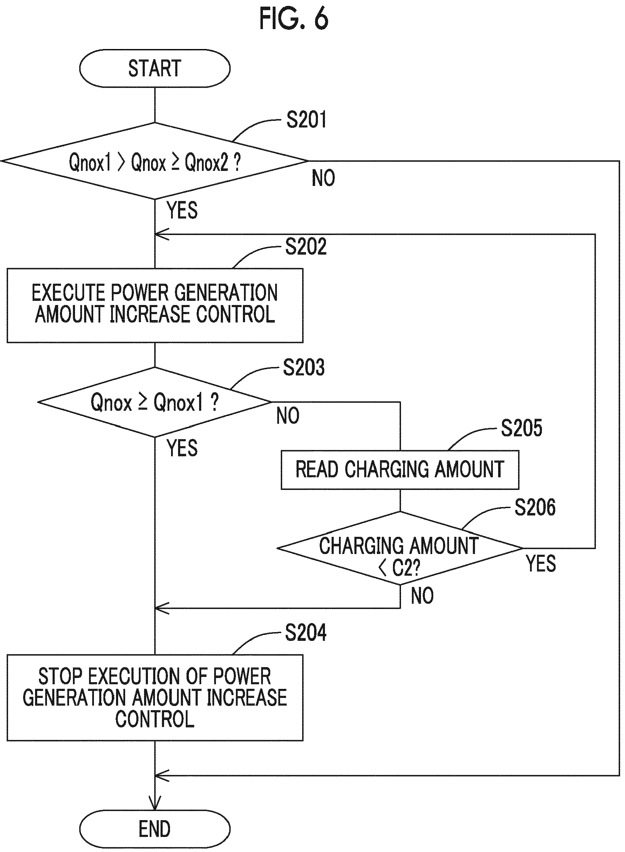

Hereinafter, the flow of the power generation amount increase control related to the present embodiment will be described based on a flowchart illustrated in FIG. 6. A main flow is realized by executing a program stored in advance in the ECU 20.

The execution of the main flow is started during the operation of the internal combustion engine 1. Then, in S201 of the main flow, whether or not the NOx storage amount Qnox in the NSR catalyst 4 estimated by the ECU 20 becomes smaller than the first predetermined storage amount Qnox1 and equal to or larger than the second predetermined storage amount Qnox2 is determined. When a negative determination is made in S201, the execution of the main flow is temporarily ended. On the other hand, when a positive determination is made in S201, next, in S202, the power generation amount increase control is executed. That is, the power dividing mechanism 51 is controlled such that the output of the internal combustion engine 1 is increased by increasing the fuel injection amount in each cylinder 2 compared to that at the time when the operational state of the internal combustion engine 1 is the normal operation and the energy equivalent to the increase of the output is supplied for power generation in the generator 53. In addition, the output increase amount of the internal combustion engine 1 at the time when the power generation amount increase control is executed is determined in advance based on experiment or the like.

Next, in S203 of the main flow, whether or not the NOx storage amount Qnox in the NSR catalyst 4 estimated by the ECU 20 becomes equal to or larger than the first predetermined storage amount Qnox1 is determined. That is, the same processing as that in Step S101 of the flow illustrated in FIG. 3 is executed. When a positive determination is made in S203, next, in S204, the execution of the power generation amount increase control is stopped. In addition, in the above-described case, the NOx storage amount Qnox in the NSR catalyst 4 becomes equal to or larger than the first predetermined storage amount Qnox1. Therefore, in the flow illustrated in FIG. 3, a positive determination is made in S101, and subsequently, the processing after S102 is executed.

On the other hand, when a negative determination is made in S203, next, in S205, the charging amount of the battery 54 at the current point of time is read. Next, in S206, whether or not the charging amount of the battery 54 read in S205 is smaller than the upper limit value C2 of the predetermined target charging amount range is determined. When a positive determination is made in S206, the processing of S202 is executed again. That is, the execution of the power generation amount increase control is continued. On the other hand, when a negative determination is made in S206, next, the processing of S204 is executed. In addition, in the above-described case, the NOx storage amount Qnox in the NSR catalyst 4 is smaller than first predetermined storage amount Qnox1. Therefore, in the flow illustrated in FIG. 3, a negative determination is made in S101. Then, the internal combustion engine 1 is operated in the normal operation until the NOx storage amount Qnox in the NSR catalyst 4 reaches the first predetermined storage amount Qnox1.

In the present embodiment, a period until the NOx storage amount Qnox reaches the first predetermined storage amount Qnox1 or a period until the charging amount of the battery 54 reaches the upper limit value C2 of the predetermined target charging amount range, after the NOx storage amount Qnox in the NSR catalyst 4 reaches the second predetermined storage amount Qnox2, is an example of "a predetermined period before the predetermined NOx reduction execution condition is satisfied". Additionally, as described above, the "predetermined NOx reduction execution condition" is not limited to the NOx storage amount Qnox in the NSR catalyst 4 reaching the first predetermined storage amount Qnox1. For that reason, the "predetermined period before the predetermined NOx reduction execution condition is satisfied" can be set in accordance with the NOx reduction execution condition.

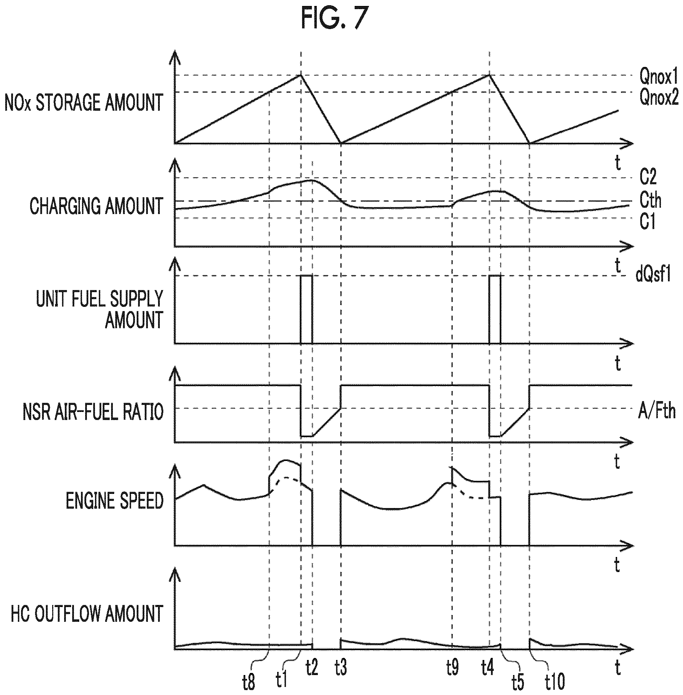

Next, transitions of the NOx storage amount in the NSR catalyst, the charging amount of the battery, the unit amount of fuel supplied to the NSR catalyst, the air-fuel ratio within the NSR catalyst, the engine speed of the internal combustion engine, and the HC outflow amount from the NSR catalyst when the power generation amount increase control related to the present embodiment is executed will be described with reference to a time chart illustrated in FIG. 7. In addition, similar to FIG. 2, FIG. 7 also illustrates the transitions of the respective parameters when the needed torque according to the throttle valve opening degree belongs to the region having the internal combustion engine 1 as a power source of the vehicle 100.

Even in the time chart illustrated in FIG. 7, similar to the time chart illustrated in FIG. 2, the NOx storage amount in the NSR catalyst 4 reaches the first predetermined storage amount Qnox1 at time t1 and time t4. Then, at time t8 before time t1 and at time t9 before time t4, the NOx storage amount in the NSR catalyst 4 reaches the second predetermined storage amount Qnox2. Accordingly, at time t8 and time t9, the power generation amount increase control is started. For that reason, from time t8 and time t9, the engine speed of the internal combustion engine 1 becomes higher than the engine speed when the operational state of the internal combustion engine 1 is the normal operation. In addition, dashed lines in the engine speed on the time chart illustrated in FIG. 7 represent the transition of the engine speed when the operational state of the internal combustion engine 1 is maintained at the normal operation, that is, the transition of the engine speed on the time chart illustrated in FIG. 2. Additionally, from time t8 and time t9, the rising rate of the charging amount of the battery 54 (charging amount rising amount per unit time) becomes large with an increase in the power generation amount in the generator 53.

As a result, even at time t4 as well as at time t1, the charging amount of the battery 54 becomes equal to or larger than the predetermined charging amount Cth. For that reason, the first NOx reduction treatment is executed even after time t4 as well as after time t1. That is, the supply of fuel to the NSR catalyst 4 having the unit fuel supply amount as a first unit supply amount is executed from time t1 to time t2. Then, when the total amount of fuel supplied to the NSR catalyst 4 reaches the predetermined supply amount at time t2, the operation of the internal combustion engine 1 is stopped, and the driving of the electric motor 52 for compensating for the needed torque according to the throttle valve opening degree is started. Similarly, the supply of fuel to the NSR catalyst 4 having the unit fuel supply amount as the first unit supply amount is executed from time t4 to time t5. Then, when the total amount of fuel supplied to the NSR catalyst 4 reaches the predetermined supply amount at time t5, the operation of the internal combustion engine 1 is stopped, and the driving of the electric motor 52 for compensating for the needed torque according to the throttle valve opening degree is started.

Then, after time t3, the NOx storage amount in the NSR catalyst 4 reaches 0 after time t2. Additionally, after time t5, the NOx storage amount in the NSR catalyst 4 reaches 0 after time t10. For that reason, at time t3 and time t10, the driving of the electric motor 52 is stopped, and the operation of the internal combustion engine 1 is resumed. In this case, even in any of time t3 and time t10, the charging amount of the battery 54 is equal or larger than the lower limit value C1 of the predetermined target charging amount range.

As described above, according to the present embodiment, the charging amount of the battery 54 can be increased by executing the power generation amount increase control before the NOx storage amount Qnox reaches the first predetermined storage amount Qnox1. For that reason, when the NOx storage amount Qnox reaches the first predetermined storage amount Qnox1, the probability that the charging amount of the battery 54 becomes equal to or larger than the predetermined charging amount Cth can be enhanced. Accordingly, when NOx stored in the NSR catalyst 4 is to be reduced, the opportunity that the first NOx reduction treatment is executed can be increased. Hence, it is possible to further suppress the amount of fuel to be consumed for reducing NOx stored in the NSR catalyst 4.

## Claims

1. An exhaust gas control system for a hybrid vehicle including an internal combustion engine (1) as a power source, an electric motor (52) as a power source, a generator (53), and a battery (54), the internal combustion engine (1) being configured to perform a lean burn operation, the generator (53) being configured to generate electrical power with power output from the internal combustion engine (1), the battery (54) being connected to the generator (53) so as to be charged with the electrical power generated by the generator (53), and the battery (54) being connected to the electric motor (52) so as to supply electrical power to the electric motor (52), the exhaust gas control system comprising:
a NOx storage-reduction catalyst (4) disposed in an exhaust passage (11) of the internal combustion engine (1); and
an electronic control unit (20) configured to
acquire a charging amount of the battery,
set a value larger than a lower limit value of a predetermined target charging amount range and smaller than an upper limit value of the predetermined target charging amount range as a predetermined charging amount,
control the internal combustion engine (1) so as to execute NOx reduction treatment in which NOx stored in the NOx storage-reduction catalyst (4) is reduced, when a predetermined NOx reduction execution condition is satisfied, the NOx reduction treatment being treatment in which fuel serving as a reducing agent is supplied to the NOx storage-reduction catalyst (4),
control the internal combustion engine (1) so as to reduce an engine speed of the internal combustion engine (1) or stop operation of the internal combustion engine (1) and control the electric motor (52) so as to compensate for a needed torque of the hybrid vehicle when the NOx reduction treatment is executed when the charging amount of the battery when the predetermined NOx reduction execution condition is satisfied is equal to or larger than the predetermined charging amount, and
control the internal combustion engine (1) so as to maintain an operational state of the internal combustion engine (1) at a normal operation when the NOx reduction treatment is executed when the charging amount of the battery when the predetermined NOx reduction execution condition is satisfied is smaller than the predetermined charging amount.

2. The exhaust gas control system according to claim 1, wherein:
the electronic control unit (20) is configured to estimate a power consumption amount that is electrical energy of the battery assumed to be consumed for driving the electric motor (52) until reduction of NOx in the NOx storage-reduction catalyst (4) is completed, when supposing that the electric motor (52) is controlled so as to reduce the engine speed of the internal combustion engine (1) or stop the operation of the internal combustion engine (1) and compensate for the needed torque of the hybrid vehicle when the NOx reduction treatment is executed; and
the electronic control unit (20) is configured to set the predetermined charging amount to a value equal to or larger than a value obtained by adding the power consumption amount to the lower limit value of the predetermined target charging amount range.

3. The exhaust gas control system according to claim 1 or 2, wherein the electronic control unit (20) is configured to control the internal combustion engine (1) such that a power generation amount obtained by the generator (53) is increased in a predetermined period before the predetermined NOx reduction execution condition is satisfied, compared to the power generation amount when the operational state of the internal combustion engine (1) is the normal operation,.

4. An exhaust gas control method for a hybrid vehicle including an internal combustion engine (1) as a power source, an electric motor (52) as a power source, a generator (53), a battery (54), an electronic control unit (20), and a NOx storage-reduction catalyst (4), the internal combustion engine (1) being configured to perform a lean burn operation, the generator (53) being configured to generate electrical power with power output from the internal combustion engine (1), the battery (54) being connected to the generator (53) so as to be charged with the electrical power generated by the generator (53), the battery (54) being connected to the electric motor (52) so as to supply electrical power to the electric motor (52), and the NOx storage-reduction catalyst (4) being disposed in an exhaust passage (11) of the internal combustion engine (1), the exhaust gas control method comprising:
acquiring a charging amount of the battery using an electronic control unit (20);
setting a value larger than a lower limit value of a predetermined target charging amount range and smaller than an upper limit value of the predetermined target charging amount range as a predetermined charging amount using the electronic control unit (20);
controlling the internal combustion engine (1) using the electronic control unit (20) so as to execute NOx reduction treatment in which NOx stored in the NOx storage-reduction catalyst (4) is reduced, when a predetermined NOx reduction execution condition is satisfied, the NOx reduction treatment being treatment in which fuel serving as a reducing agent is supplied to the NOx storage-reduction catalyst (4);
controlling the internal combustion engine (1) using the electronic control unit (20) so as to reduce an engine speed of the internal combustion engine (1) or stop operation of the internal combustion engine (1) and controlling the electric motor (52) by the electronic control unit (20) so as to compensate for a needed torque of the hybrid vehicle when the NOx reduction treatment is executed when the charging amount of the battery when the predetermined NOx reduction execution condition is satisfied is equal to or larger than the predetermined charging amount; and
controlling the internal combustion engine (1) by the electronic control unit (20) so as to maintain an operational state of the internal combustion engine (1) at a normal operation when the NOx reduction treatment is executed when the charging amount of the battery when the predetermined NOx reduction execution condition is satisfied is smaller than the predetermined charging amount.

5. The exhaust gas control method according to claim 4, further comprising estimating, using the electronic control unit (20), a power consumption amount that is electrical energy of the battery assumed to be consumed for driving the electric motor (52) until reduction of NOx in the NOx storage-reduction catalyst (4) is completed, when supposing that the electric motor (52) is controlled so as to reduce the engine speed of the internal combustion engine (1) or stop the operation of the internal combustion engine (1) and compensate for the needed torque of the hybrid vehicle when the NOx reduction treatment is executed,
wherein the predetermined charging amount is set to a value equal to or larger than a value obtained by adding the power consumption amount to the lower limit value of the predetermined target charging amount range.

6. The exhaust gas control method according to claim 4 or 5, further comprising controlling the internal combustion engine (1) using the electronic control unit (20) such that a power generation amount obtained by the generator (53) is increased in a predetermined period before the predetermined NOx reduction execution condition is satisfied compared to the power generation amount when the operational state of the internal combustion engine (1) is the normal operation,.
